# EUROPÄISCHE PATENTSCHRIFT

(11) **EP 2 326 483 B1**
(45) Veröffentlichungstag und Bekanntmachung des Hinweises auf die Patenterteilung: **26.02.2014**
(21) Anmeldenummer: 09777278.4
(22) Anmeldetag: 17.07.2009
(51) Int. Cl.: B29C 51/16, B65C 9/18, B65D 23/08, B29C 51/22

(54) **VERFAHREN UND EINRICHTUNG ZUM HERSTELLEN VON ETIKETTIERTEN, FOLIENGEFORMTEN BEHÄLTERN**
METHOD OF, AND APPARATUS FOR, PRODUCING LABELLED, SHEET-MATERIAL CONTAINERS
PROCÉDÉ ET DISPOSITIF DE RÉALISATION DE RÉCIPIENTS ÉTIQUETÉS MOULÉS

(30) Priorität: 18.07.2008 DE 102008033799
(43) Veröffentlichungstag der Anmeldung: 01.06.2011
(73) Patentinhaber: Kourtoglou S.A., 210 53 Nea Kios - Argos (GR)
(72) Erfinder: KOURTOGLOU, Dimitrios, GR-21 053 Nea Kios (GR); KOURTOGLOU, Ioannis, GR-21 053 Nea Kios (GR)
(74) Vertreter: Grünecker, Kinkeldey, Stockmair & Schwanhäusser
(86) Internationale Anmeldenummer: PCT/EP2009/005224
(87) Internationale Veröffentlichungsnummer: WO 2010/006811

(56) Entgegenhaltungen:
- EP-A- 1 604 803
- EP-A- 1 795 321
- EP-A1- 1 129 964
- EP-A2- 0 305 714
- EP-A2- 1 710 073
- WO-A1-01/21382
- DE-A1- 10 348 182
- FR-A1- 2 787 057
- US-A- 3 547 722
- US-A- 4 462 952
- DATABASE WPI Week 198131 Thomson Scientific, London, GB; AN 1981-55888D XP002579769 -& JP 56 070910 A (MITSUBISHI MONSANTO KK) 13. Juni 1981 (1981-06-13)

## Beschreibung

Die Erfindung betrifft ein Verfahren und eine Einrichtung zum Herstellen von etikettierten, foliengeformten Behältern.

Für die Herstellung von Lebensmittelverpackungen, wie z.B. für flüssige oder pastöse Produkte, werden im allgemeinen Form-Fill-Seal-Maschinen verwendet, in denen Kunststofffolien einer Formstation durch eine Kombination aus Tiefziehen und Blasformen in Mehrfach-Werkzeugformen zu dünnen Kunststoffbehältern geformt, diese anschließend befüllt und mit einem Deckel versiegelt zu einer Verpackungsstation geführt werden. Zum Beispiel werden auf diese Weise mit Yoghurt oder anderen Frischhalte-Lebensmitteln versehene Verpackungseinheiten hergestellt und in den Handel gebracht.

Ein Verfahren und eine Einrichtung nach dem Oberbegriff der Ansprüche 1 und 7 ist aus der EP 1 710 073 A2 bekannt. Allerdings wirkt die Einzelzufuhr von Etiketten zu einem Formwerkzeug leistungsbegrenzend.

Beispiele für solche Herstellungsverfahren und -einrichtungen in einer Form-Fill-Seal-Verpackungslinie sind z.B. der DE 197 06 797 A1 oder der WO 2004/106162 A2 zu entnehmen.

Derartige befüllte Verpackungseinheiten werden im allgemeinen hinsichtlich ihrer Deckelfolie mit inhaltskennzeichnenden Aufdrucken versehen, es ist aber auch bekannt, am Außenumfang der im wesentlichen zylindrischen Verpackungen Etikettierungen aufzubringen. Hierbei werden im allgemeinen für eine faltenfreie Etikettierung kreiszylindrische Behälterformen vorgesehen, wobei vor der Formgebung des Behälters in die Form in Umfangsrichtung sich erstreckende Etiketten eingelegt werden, die sodann am Außenumfang des kreiszylindrischen Behälters mit diesem eine innige Verbindung eingehen oder es werden auch nachträgliche Etikettierungen vorgenommen.

In Abhängigkeit von der Materialpaarung zwischen Etikettenmaterial und Behälterfolie ist es auch erforderlich, einen Haftverbinder für die dauerhafte Etikettenanbringung vorzusehen.

Die vorbeschriebene "In-Mold-Etikettierung" erfordert praktisch kreiszylindrische Behälter, da ansonsten Schwierigkeiten hinsichtlich einer faltenfreien Etikettierung auftreten.

Die Aufgabe ist innerhalb eines Behälter-Herstellungsprozesses aus Folienmaterial, insbesondere durch eine Kombination von Tiefziehen und Blasformen, höchst vorzugsweise im Rahmen einer Form-Fill-Seal-Maschine zugleich eine Etikettierung der Behälter dadurch zu bewirken, dass ein Etiketten-Folienmaterial von einer Seite her in die Behälter-Formgebungseinrichtung (Maschine) eingeführt, dort umgelenkt und im wesentlichen parallel zu einer Hauptzufuhrrichtung für das Behälter-Folienmaterial geführt wird, wobei als Etiketten-Folienmaterial vorzugsweise Polypropylen verwendet wird. Es kann aber auch eine Folie aus vorzugsweise mit einem Haftvermittler (Kleber) beschichtetem Papier in Abhängigkeit von der Art des Kunststoffes für den Behälter gewählt werden. Die durch eine Schneideinrichtung geschnittenen Etiketten werden unter Vakuumeinsatz, vorzugsweise durch der Etiketten-Schneideinrichtung zugeordnete Auswerferstifte mittels Unterdruck gehalten und an eine Übergabevorrichtung übergeben, die die vereinzelten Etiketten ebenfalls mittels Vakuum hält, und insbesondere unter Verschwenken aus einer Etiketten-Aufnahmeposition in eine Etiketten-Abgabeposition in die Formhohlräume einer Form einlegt, die zu diesem Zweck aus ihrer für die Formung der Behälter vorgesehenen, im allgemeinen vertikalen Position in eine für die Aufnahme der Etiketten vorgesehen Position, im allgemeinen eine horizontale Position, die den Hal-teelementen, insbesondere Einzeldomen der Übergabevorrichtung gegenüberliegt, verschwenkbar ist.

Ein besonders vorteilhaftes Merkmal des erfindungsgemäßen Verfahrens sowie der erfindungsgemäßen Einrichtung ist darin zu sehen, dass die Etiketten entweder nur an einer Seitenwändfläche der Formhohlräume anhaftend eingelegt, vorzugsweise die Etiketten aber aus einem, insbesondere streifenförmigen, Bodenabschnitt mit sich an diesen mittels eines Übergangsbereiches anschließenden Displayabschnitt für die Etikettierung einer Seitenwand ausgeführt sind, so dass das Etikett nicht entlang eines Außenumfangs in Umfangsrichtung mit dem Behälter, sondern, dessen Bodenfläche kreuzend, von einer Seitenfläche bis zur Bodenfläche oder über diese hinweg geführt ist. Bei Verwendung von miteinander verbundenen gegenüberliegenden Displayabschnitten erstreckt sich das Etikett von einer Seitenfläche über die Bodenfläche zur anderen Seitenfläche, so dass auch konische, also nicht-kreiszylindrische Behälter in vorteilhafter Weise und ohne jede Faltengefahr etikettiert werden können.

Mittels einer kreuzförmigen Gestaltung (vier Displayabschnitte, verbunden über einen Bodenabschnitt) aufweisende Etiketten können dabei die vorzugsweise konischen Behälter auch allseitig etikettiert werden. Außerdem kann auf diese Weise bodenseitig in vorteilhafter Weise ein Identifizierungssystem, vorzugsweise ein Barcode oder ein elektronischer passiver oder aktiver Identdatenspeicher (z.B. RFID-Tag) vorgesehen sein, die eine einfache Identifizierung und Datenerfassung der jeweiligen Behälter und ihrer Inhalte sowie von Verbrauchs- oder anderen Logistikdaten ermöglicht. Dies ist bei Etikettieren von Behältern, die die Bodenfläche freilassen, so nicht in einfacher Weise möglich. Insbesondere sind bodenseitig lesbare Informationen wesentlich einfacher zu erfassen als am Umfang des Behälters vorhandene Informationen.

Die Erfindung wird anhand der nachstehend schematisch dargestellten Figuren des erfindungsgemäßen Verfahrens und der Einrichtung näher erläutert. Es zeigen:
- Fig. 1: eine Gesamtdarstellung einer Form-Fill-Seal-Maschine mit integrierter Etikettiervorrichtung nach einem Ausführungsbeispiel der Erfindung,
- Fig. 2: eine schematische Schnittdarstellung einer Hauptzuführungsebene einer Behälter-Folienbahn mit schematischer Formstation sowie Form-Bewegungs-einheit sowie Etiketten-Schneideinrichtung und Etiketten-Restmaterialaufwickeleinrichtung,
- Fig. 3: eine Draufsicht nach Fig. 2,
- Fig. 4: eine perspektivische, schematische Darstellung der Einrichtung nach Fig. 2 und 3,
- Fig. 5: eine schematische Vorderansicht nach Fig. 2, wobei eine Etiketten-Folienmaterialzuführungshaspel (seitliche Zuführung) erkennbar ist,
- Fig. 6: eine vergrößerte Darstellung nach Fig. 2,
- Fig. 7: eine Etiketten-Schneideinrichtung als Einzelheit nach Fig. 6,
- Fig. 8: eine Darstellung ähnlich derjenigen in Fig. 2 und 6, jedoch in einer anderen Phase einer Übergabe von geschnittenen Etiketten aus der Etiketten-Schneideinrich-tung an eine Etiketten-Übergabevorrichtung (Einzeldome),
- Fig. 9: eine Einzelheit nach Fig. 8,
- Fig. 10: eine Einzelheit ähnlich derjenigen nach Fig. 9, jedoch für einen weiteren Übergabezustand zwischen der Übergabe von geschnittenen Etiketten von der Schneideinrichtung an die Etiketten-Übergabevorrichtung (Einzeldorne),
- Fig. 11: eine Einzelheit nach Fig. 10,
- Fig. 12: eine Darstellung ähnlich derjenigen in den Fig. 2, 6 und 8, jedoch für eine weitere Phase der Übergabe der durch die Etiketten-Übergabevorrichtung (Einzeldome) ergriffenen Etiketten auf dem Wege zum Einsetzen in zugehörige Formhohlräume einer Form,
- Fig. 13: eine Einzelheit der Etiketten-Schneideinrichtung sowie der Etiketten-Übertragungsvorrichtung nach Fig. 12,
- Fig. 14: eine Einzelheit einer Übergabe der Etiketten durch die Etiketten-Übergabevorrichtung in Formhohlräume der Form,
- Fig. 15: eine Einzelheit nach Fig. 14,
- Fig. 16: eine schematische Darstellung der Einrichtung vergleichbar derjenigen in den Fig. 2, 6 und 8 und 12, jedoch für einen anderen Verfahrensabschnitt nach Übergabe der Etiketten in die Formhohlräume der Form,
- Fig. 17: eine Einzelheit nach Fig. 16,
- Fig. 18: eine schematische Darstellung der Einrichtung in einem anderen Verfahrensabschnitt der Formung der Behälter in den Formhohlräumen, die mit den Etiketten bestückt sind, vergleichbar der Darstellung in Fig. 2, 6, 8, 12 und 16,
- Fig. 19: eine Einzelheit für die neue Vorbereitung der Übergabe von Etiketten durch die Etiketten-Schneideinrichtung an die Etiketten-Übergabevorrichtung (Einzeldome),
- Fig. 20: eine Einzelheit der Formung der Behälter nach Fig. 18,
- Fig. 21: eine Form in mehreren Darstellungen mit
- Fig. 21a: eine Form mit acht Formhohlräumen in perspektivischer Darstellung,
- Fig. 21b: die Form gemäß Fig. 21 a in Draufsicht,
- Fig. 21c: einen Querschnitt gemäß Schnitt AAII-AAII nach Fig. 21b,
- Fig. 21d: einen Querschnitt gemäß Schnitt AAI-AAI nach Fig. 21b, und
- Fig. 21e: eine Einzelheit nach Fig. 21d,
- Fig. 22: ein Etikett mit einem Bodenabschnitt und einem Displayabschnitt,
- Fig. 23: ein endgeformtes Etikett nach Fig. 22,
- Fig. 24: ein Etikett mit einem mittleren Bodenabschnitt und zwei Displayabschnitten als Etikett-Zuschnitt,
- Fig. 24a: ein fertig gefaltetes, gemäß einem Einlegen in einen Formhohlraum vorbereites Etikett nach Fig. 24,
- Fig. 25: einen konischen Behälter 8 mit einem Etikett nach Fig. 23,
- Fig. 26a: einen Zuschnitt für ein kreuzförmiges Etikett mit vier Displayabschnitten und gekreuztem Bodenabschnitt,
- Fig. 26b: eine Vorderansicht nach Fig. 26a,
- Fig. 26c: eine perspektivische Ansicht nach Fig. 26a und b,
- Fig. 27 und Fig. 28: jeweils weitere Behälterformen mit zugeordneten, vorgeformten Etiketten.

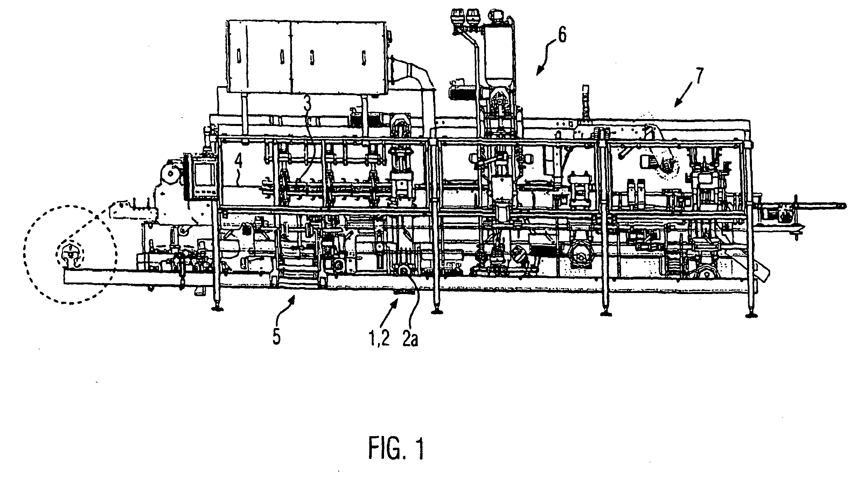

Figur 1 zeigt eine Gesamtdarstellung einer Form-Fill-Seal-Maschine zur Herstellung von produktgefüllten Kunststoff-Behältern aus einem Folienmaterial, das als Folienbahn oder in vorgeschnittenen Streifen in eine Formstation 1 geführt wird, der auch eine nachstehend noch näher erläuterte Form-Bewegungseinheit 2 zugeordnet ist, wobei stromauf Heizplatten 3 opponierend angeordnet sind zur Vorerwärmung einer in diesem Fall als Behälter-Folienbahn vorgesehenen Folienmaterialbahn 4. Mit 5 ist schematisch eine Etikettenfolienmaterial-Zuführungseinrichtung bezeichnet, wobei diese im nachfolgenden noch näher erläutert wird.

Eine Produkt-Füllstation 6 bzw. Verpackungsstation 7 sind von konventioneller Ausbildung und werden hier nicht näher erläutert.

Im Nachfolgenden geht die Beschreibung daher auf den ersten Abschnitt der Form-Fill-Seal-Maschine nach Fig. 1 bis einschließlich der Formstation 1 bzw. der Form-Bewegungsstation 2 ein, wobei ein solcher Abschnitt auch in einer anderen Produktbehälter-Formeinrichtung, der nicht unbedingt ein Befüllen nachgeschaltet ist, verwendet werden kann.

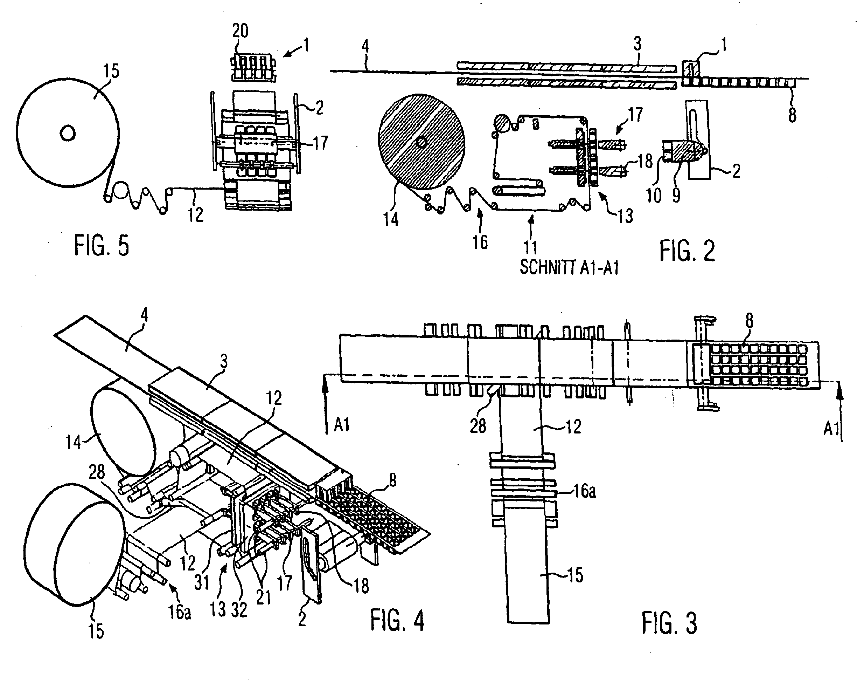

Figur 2 zeigt diesen Abschnitt der Einrichtung, die zum Herstellen und Abfüllen von Zoghurtbechem dienen kann, in schematischer Darstellung in ihren für die nachstehenden Erläuterungen wesentlichen Komponenten. Hauptsächlich sind diese Komponenten die Formstation 1, in der aus der Behälter-Folienbahn 4 die einzelnen Behälter 8 geformt und einer späteren Befüllung zugeführt werden. Unterhalb der durch die Behälter-Folienbahn 4 gebildeten Hauptzuführungsebene befindet sich eine Form 9, die mit Hilfe einer Kurvensteuerung (Steuerkurve 2b) aus einer Vertikalposition, in der die Behälter 8 geformt werden, in eine Horizontalposition, die in Fig. 2 gezeigt ist, bewegt werden kann, in der die Form 9 zur Aufnahme von Etiketten 25 in den zugehörigen Formhohlräumen 10 vorgesehen und vorbereitet ist.

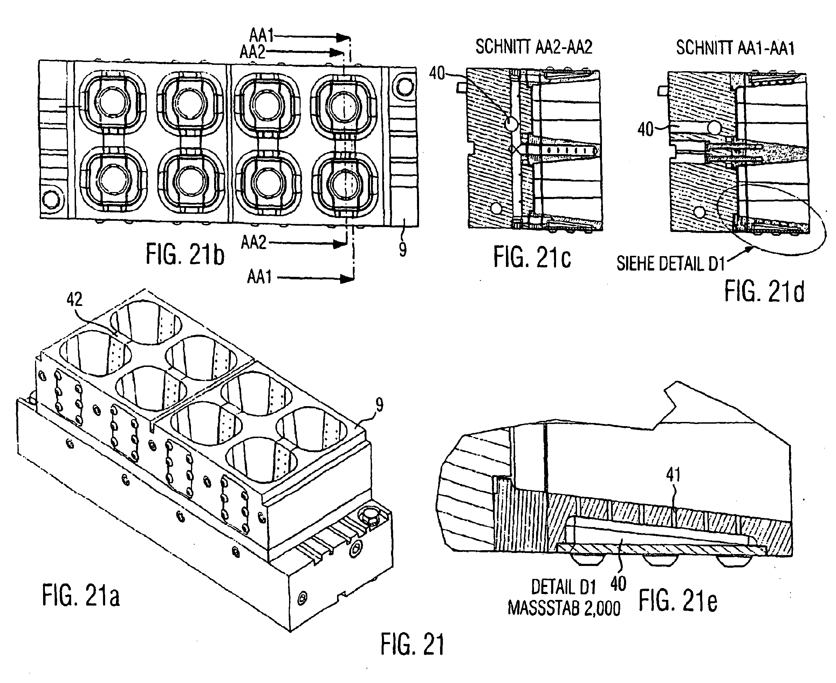

Die Form enthält z.B. in zwei Reihen 2 x 4 Formhohlräume 10, die in einem Block angeordnet sind, entsprechend ist die Formeinrichtung 1 ausgebildet, so dass gleichzeitig acht Behälter 8 hergestellt werden können (vgl. auch Fig. 21).

Die Behälter 8 werden vorzugsweise nach ihrer Herstellung durch die Behälter-Folienmaterialbahn 4 weiterhin zusammengehalten, so dass sie nicht individuell transportiert werden müssen (vgl. Fig. 3 und Fig. 4).

Mit 11 ist schematisch ein Teil der Etiketten-Folienmaterial-Zuführungseinrichtung 5 bezeichnet, wobei hier nur der sich innerhalb der Maschineneinrichtung befindliche Teil des Etiketten-Folienmateriales 12 im Durchgang durch eine Etiketten-Schneideinrichtung 13 einschließlich einer Aufwickelhaspel 14 für das Etiketten-Restmaterial gezeigt ist. Spannund Tänzerwalzen 16 sind als übliche Bahnführungsmittel für das Etiketten-Folienmaterial 12 vorgesehen.

Mit 17 ist schematisch eine Etiketten-Übertragungsvorrichtung (Einzeldorne 18) bezeichnet.

In Figur 3 ist die in Fig. 2 schematisch dargestellte Einrichtung in Draufsicht gezeigt, wobei deutlich ist, dass das Etiketten-Folienmaterial 12 seitlich in eine Hauptrichtungsebene der Maschine eingeführt wird, von einer Etiketten-Folienmaterial-Vorratshaspel 15, wie dies auch anhand der perspektivischen Darstellung von Fig. 4 deutlich ist. Die Einführung des Etiketten-Folienmateriales 12 geschieht über ein herkömmliches Bahnspann und -führungssystem 16a mittels Spann- und Tänzerwalzen, wobei eine Schrägwalze 28 für eine Umlenkung der senkrecht zur Hauptzuführungsrichtung der Behälter-Folienmaterialbahn 4 eingeführten Etiketten-Folienbahn 12 sorgt, so dass das Etiketten-Folienmaterial 12 dann parallel zur Behälter-Folienbahn 4 weitergeführt wird, wie dies insbesondere auch aus der perspektivischen Darstellung von Fig. 4 ersichtlich ist.

Figur 5 verdeutlicht die Einrichtung nach Fig. 2 in schematischer Frontalansicht, wobei hier in der Formstation 1 die gemeinsame Anordnung eine Mehrzahl von Formstempel 20 ebenso ersichtlich ist, wie die Etiketten-Übergabevorrichtung 17.

In Figur 4 ist schematisch ebenfalls die Schneideinrichtung 13 für das Ausschneiden von Etiketten 25 ersichtlich, wobei die Etiketten-Folienbahn zwischen einer oberen und einer unteren Werkzeug-Schneidplatte 31, 32 hindurchgeführt wird, wie auch die Etiketten-Übergabevorrichtung 17 mit den Einzeldomen 18, achsfest angeordnet auf einer oberen und unteren Achse 21.

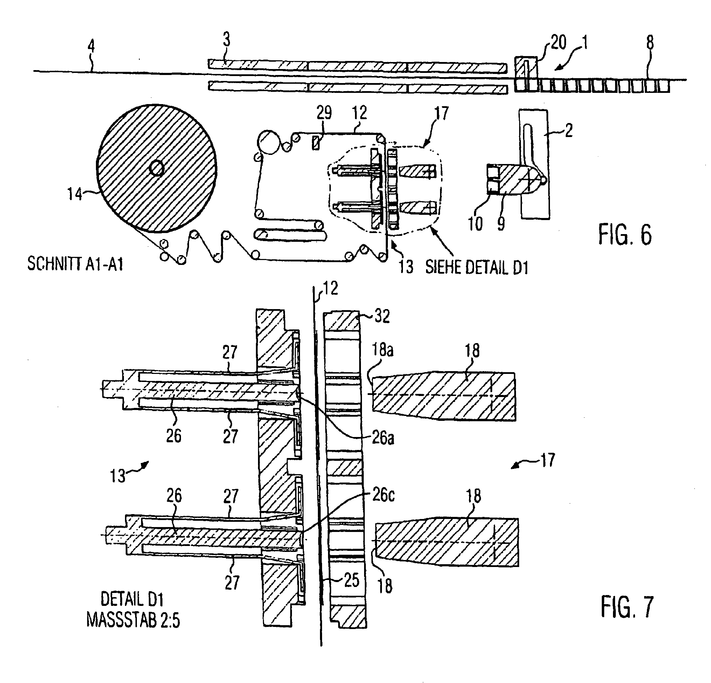

In den Figuren 6 und 7 ist ein Ausgangszustand für die Bildung und weitere Verarbeitung der Etiketten 25 gezeigt, wobei die Darstellung nach Fig. 6 praktisch derjenigen nach Fig. 2 entspricht.

Die Einzelheit nach Figur 7 zeigt schematisch im Längsschnitt die Etiketten-Schneideinrichtung 13 mit einer oberen Werkzeug-Schneidplatte 31 und einer unteren Werkzeug-Schneidplatte 32, wobei die Etiketten-Folienbahn 12 zwischen den Schneidplatten 31, 32 hindurchgeführt wird und aus diesen die Etiketten 25 ausgeschnitten werden. Einzeldorne 18 der Etiketten-Übertragungsvorrichtung 17, vorgesehen in einem oberen und einem unteren Block, sind ebenfalls schematisch im Schnitt dargestellt. Ein vorderes Aufnahmeende 18a der Einzeldorne 18 besitzt eine konische Form, die im wesentlichen der Endform der Behälter 8 und der entsprechenden Formhohlräume 10 der Form 9 entspricht. Innerhalb der Etiketten-Schneidvorrichtung 13 sind, relativ zueinander beweglich, ein zentrale, stirnseitig mit Druckluft beaufschlagbarer Auswerferstift 26 und, relativ zu diesem beweglich, Führungsfinger 27 vorgesehen, die nachfolgend noch näher erläutert werden.

Hier nicht dargestellt Druckluftkanäle können zentral mit jeweils an vorderen Stirnseiten 26a mündenden Vakuumbohrungen verbunden sein, die es ermöglichen, dass die Auswerferstifte 26 im angesaugten Zustand, die durch die Schneideinrichtung 13 ausgeschnittenen Etiketten 25 halten, wie dies nachfolgend noch gezeigt wird.

Obwohl hier ebenfalls nicht dargestellt, sind auch die Einzeldorne 18 der Etiketten-Übertragungsvorrichtung 19 mit Vakuumkanälen versehen, die auf einer vorderen Stirnseite 18a münden, so dass auch diese Stirnseite 18a der Einzeldorne 18 mit Unterdruck beaufschlagt werden kann, zum Halten von an diese übergebenen Etiketten 25.

Eine nachfolgend noch dargestellte Längsbewegung der Auswerferstifte 26, wie auch der Führungsfinger 27, erfolgt jeweils pneumatisch.

Ein Materialvorschub der Etiketten-Folienbahn 12 erfolgt mittels Steuerung durch eine Fotozelle 29 unter Abtastung entsprechender, auf dem Etiketten-Folienmaterial 12 befindlicher, hier nicht gezeigter, Markierungen.

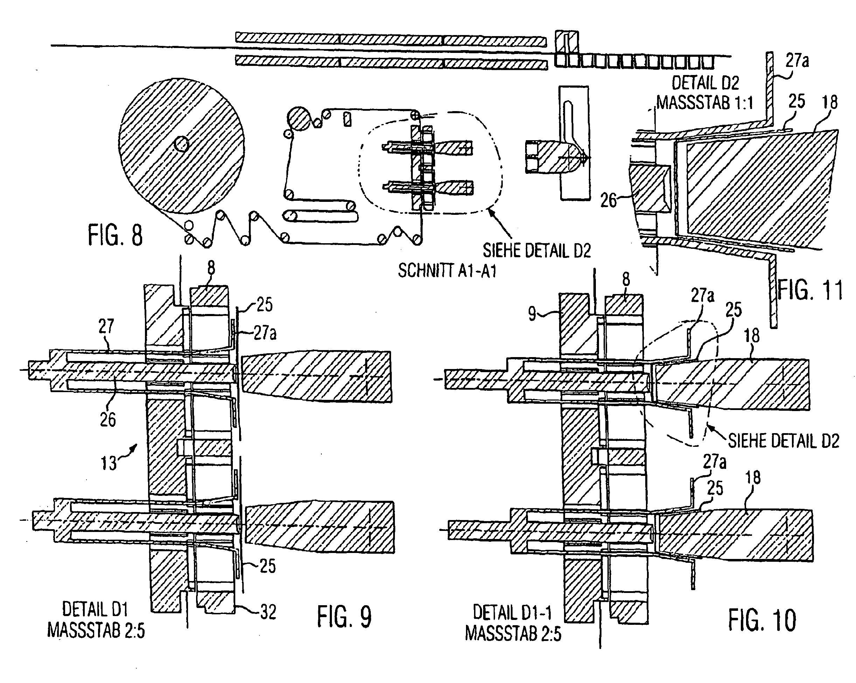

Figur 8 zeigt vergleichbar wie Fig. 6 in schematischer Darstellung die Einrichtung in einer nächsten Phase, in der die Etiketten 25 bereits aus dem Verbund der Etiketten-Folienmaterial 12 ausgeschnitten worden sind und nach gewisser Longitudinalbewegung der Auswerferstifte 26 durch Unterdruck an den Stirnseiten derselben gehalten werden. Auch die Führungsfinger 27 haben sich in gleicher Weise längs bewegt und stützen mit auswärts weisenden Flanschabschnitten 27a die Etiketten 25 zusätzlich ab. In dieser Position werden sodann die Führungsfinger 27 vorgeschoben, um die Etiketten mit ihren Displayabschnitten 25 an die konischen Aufnahmeabschnitte der Einzeldorne 18 anzulegen, wie dies in Fig. 10 und als Einzelheit in Fig. 11 dargestellt ist. Zugleich wird eine Unterdrucksteuerung derart vorgenommen, dass die Stirnseiten 18a der Einzeldorne mit Unterdruck beaufschlagt werden, während die Unterdruckzufuhr zu den Stirnseiten der Auswerferstifte 26 abgeschaltet oder verringert wird, so dass im Ergebnis die bereits vorgefalteten Etiketten 25 sicher an den Aufnahmeenden der Einzeldorne 18 der Etiketten-Übertragungsvorrichtung 17 aufgenommen sind.

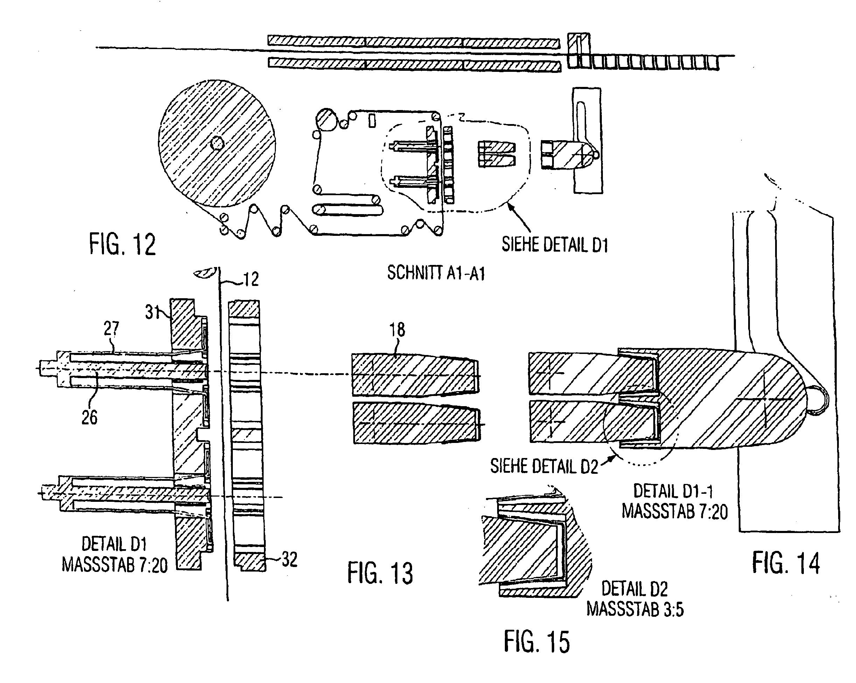

Sodann werden die auf ihren Achsen festgelegten Einzeldorne 18 der Etiketten-Übertragungsvorrichtung 17 um ca. 180° gegenläufig verschwenkt, so dass diese in die in Fig. 13 dargestellte Position gelangen. Fig. 12 ist eine schematische Darstellung dieser Phase, die im übrigen den bereits erläuterten Darstellungen nach Fig. 2, 6 oder 8 entspricht. Zugleich sind inzwischen die Auswerferstifte 26 und die Führungsfinger 27 in die obere Werkzeug-Schneidplatte 9 der Etiketten-Schneidvorrichtung 13 zurückgezogen worden, und wird ein neuer Abschnitt der Etiketten-Folienbahn 12 in das Schneidwerkzeug 13 eingeführt, wie auf der linken Seite von Fig. 13 dargestellt ist.

Zugleich wird auch ein vertikaler Abstand der Einzeldorne so verändert, dass dieser einem vertikalen Abstand der Formhohlräume 10 in der Form 9 entspricht, so dass, wie in Fig. 14 dargestellt ist, durch eine Schlittenbewegung in horizontaler Richtung, diese wird durch Servomotoren bewirkt unter Verwendung eines hier nicht gestellten Zahnriemens zur Transferbewegung eines Wagens, der die Etiketten-Übertragungsvorrichtung 17 trägt, so dass die per Vakuum an den Einzeldomen gehaltenen Etiketten 25, wie auf der rechten Seite in Fig. 14 und in der Einzelheit von Fig. 15 gezeigt, in die Formhohlräume 10 der Form 9 eingesetzt werden können. Die Einzeldorne 18 sind achsfest montiert, so dass ihre Schwenkbewegung um ca. 180° durch entsprechende Achsbewegung erfolgt und auch die Vertikaleinstellung durch entsprechende Veränderung des Vertikalabstandes der in dem hier nicht gezeigten Wagen beweglich geführten Achsen der Einzeldorne realisiert wird.

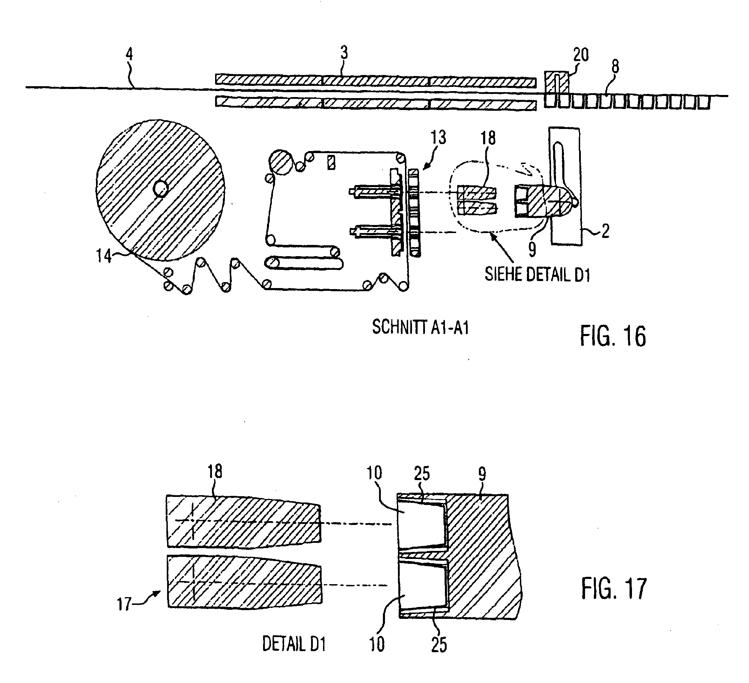

Die Formhohlräume 10 sind mit hier nicht näher dargestellten Unterdruckkanälen, die zumindest an einer der Seitenwände, vorzugsweise an gegenüberliegenden Seitenwänden und auch an einer Bodenfläche münden, versehen, so dass in vergleichbarer Weise eine Übergabe der Etiketten 25 an die Formhohlräume unter Unterdruckbeaufschlagung von Innenwänden der Formhohlräume 10 erfolgt, zugleich eine Entlastung des Unterdruckes im Bereich der Einzeldorne 18 vorgenommen wird, so dass die Etiketten 25 sicher in den Formhohlräumen platziert werden, wie dies schematisch in Fig. 17 dargestellt ist, wobei Fig. 16 wiederum in vergleichbarer Darstellung wie Fig. 2, 6, 8, 12 eine neue Verfahrensphase zeigt, in der die Einzeldorne 18 bereits wieder aus der Form 9 zurückgezogen sind. Eine Ausgestaltung der Form 9 mit Vakuumbeaufschlagung gegenüberliegende Seitenwände ist beispielshaft in den Fig. 21a bis 21e gezeigt, *wobei hier* Haupt-Unterdruckkanäle 40 in Formkanäle 41 münden, die sich auf Innenwänden der Formhohlräume öffnen. Formstücke 42 sind hierbei lösbar gestaltet.

Wesentlich ist, dass im Rahmen der vorliegenden Erfindung die Etiketten 25 nicht entlang der Formhohlräume in Umfangsrichtung (koaxial zu einer Mittelachse) über die Seitenwände, sondern in kreuzender Weise gelegt werden, d.h. sich von einer Seitenwand eines Formhohlraumes 10 über die Bodenfläche zu einer gegenüberliegenden Seitenwand erstrecken, sofern ein Etikett mit einem Mittelabschnitt und zwei Displayabschnitten verwendet wird, wie dies nachfolgend noch erläutert ist.

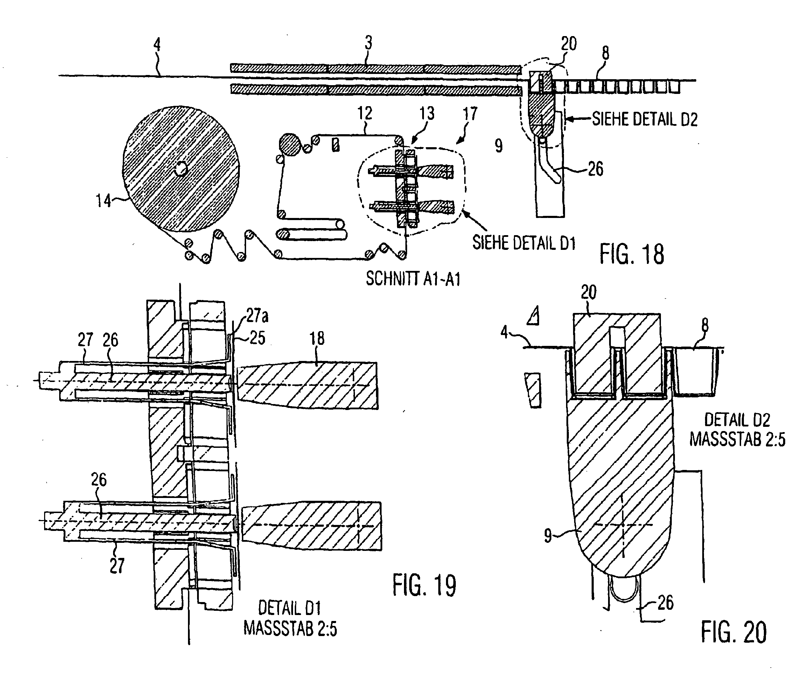

Figur 18 verdeutlicht in entsprechender Weise wie die Fig. 2, 6, 8, 12, 16 in schematischer Darstellung eine abschließende Stufe der Behälterherstellung, in der nunmehr, wie auch in Fig. 18 dargestellt ist, die Form 9 unter Kurvensteuerung durch eine Kurbelwellenvorrichtung 2a (vgl. Fig. 1) und unter Nockensteuerung durch die gegenüberliegenden Steuerkurven 2b in ihre Vertikalposition überführt wird, wobei eine Kurbelschwinge an der Form 9 angreift und diese sowohl vertikal bewegt als auch in der kurvengesteuerten Schwenkbewegung durch die Steuerkurve 2b antreibt.

Figur 20 verdeutlicht als Einzelheit die nunmehr erfolgende Tiefzieh-Formgebung der Behälter 8 durch eingreifende Vorformstempel 20, wobei dieser Vorgang im allgemeinen von einem hier nicht dargestellten Blasformschritt ergänzt wird, der zum innigen Anlegen der Behälter-Folie an alle Innenwände des Formhohlraumes 10 führt, und zwar unter inniger stoffschlüssiger Verbindung mit dem in die Form eingelegten Etikett 25, das sich daraufhin an zumindest einer Seitenfläche, vorzugsweise im vorliegenden Ausführungsbeispiel aber an gegenüberliegenden Seitenflächen einschließlich der Bodenfläche befindet und innig mit der Außenseite des Behälters 8 eine Verbindung eingeht.

Vorzugsweise besteht die Behälter-Folie 4 aus Polypropylen und wird auch für die Etiketten-Folienbahn 12 Polypropylen verwendet, so dass eine innige Anhaftung im Formungsprozess der Behälter innerhalb der Form 8 zustandekommt.

Das Behälter-Folienmaterial ist jedoch hierauf nicht beschränkt, vielmehr kann auch Polysteren verwendet werden, wobei dann eine Paarung mit haftmittelbeschichtetem Papier als Etiketten-Folienmaterial verwendet wird, das unter Einsatz einer Haftschicht bei der Formung des Behälters 8 in der Form 9 auf einer Außenfläche des dann aus Polysterenbestehenden Behälters 8 anhaftet.

Die Materialpaarungen sind jedoch nicht in beschränkendem Sinne aufzufassen, vielmehr können auch andere geeignete Folienpaarungen zwischen Behältermaterial und Etikettenmaterial verwendet werden. In Fig. 19 ist zugleich dargestellt, dass zeitgleich zur Ausbildung der Behälter 8 in der Formstation 1 bereits das Ausschneiden neuer Etiketten 25 in der Etiketten-Schneidvorrichtung 13 erfolgt ist, diese von den Auswerferstiften 26 unter Druck beaufschlagt gehalten und durch die Führungsfinger 27 bzw. deren Außenflansche 27a abgestützt werden, wie dies bereits vorher erläutert wurde.

Durch die Erfindung ist ein vorteilhaftes In-Mold-Etikettieren von insbesondere konischen Behältern in einem in-situ-Prozess möglich, wobei die Behälterform darauf nicht beschränkt ist. Vorzugsweise kann die Erfindung im Rahmen einer Form-Fill-Seal-Maschine angewandt werden, ebenfalls ohne hierauf beschränkt zu sein.

Eine den Formhohlraum querende Anordnung des Etiketts 25 ermöglicht die faltenfreie Etikettierung von konischen Behältern mit oder ohne Hinterschnitt.

Vorzugsweise sind an den einen Behälterboden kreuzenden Stegabschnitten des Etiketts 25 Kennzeichnungen, wie Barcodes oder andere aktive oder passive, elektronisch gespeicherte Informationen enthaltende Identcodes vorgesehen, die leicht abgetastet werden können.

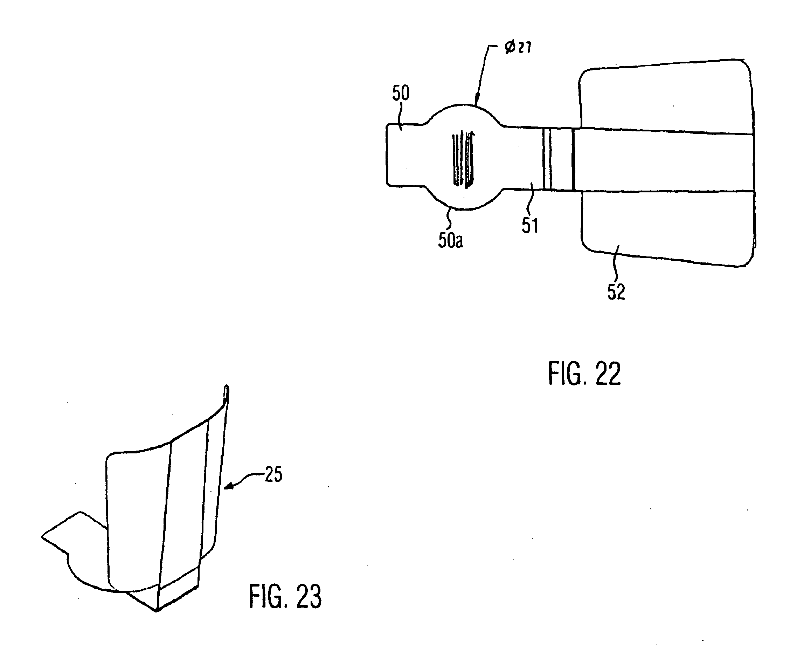

Die Figuren 22 bis 30 zeigen verschiedene Formen von Etiketten, zum Teil in Verbindung mit entsprechenden Behältern 8.

In Figur 22 ist ein Etikett 25 für einen vorzugsweise konischen Behälter 8 gezeigt, mit einem stegförmigen Bodenabschnitt 50 und einem über einen Umlenkabschnitt 51 mit diesem integral verbundenen, bedruckten Displayabschnitt 52. Auf einer Außenseite des Stegabschnittes ist vorzugsweise ein Barcode 53 in einem konvex sich auswärts erstreckenden Mittenbereich 50a vorgesehen, zur Informationsspeicherung. Ein solcher Mittenabschnitt 50a kommt vorzugsweise in einem zentralen, vertieften Bodenbereich des Behälters 8 zu liegen und ist leicht durch äußere elektronische oder andere Leseeinrichtungen erfassbar.

Figur 23 zeigt das Etikett in einem gefalteten Zustand, wie es sich praktisch innerhalb eines Formhohlraumes befindet, ehe durch Tiefziehen und Blasformen die Behälter-Folie in den Formhohlraum 10 der Form 9 hineingedrückt wird und von innen gegen das Etikett, wie es in Fig. 23 dargestellt ist, zur Anlage und zur innigen, stoffschlüssigen Verbindung mit dem Etikett kommt.

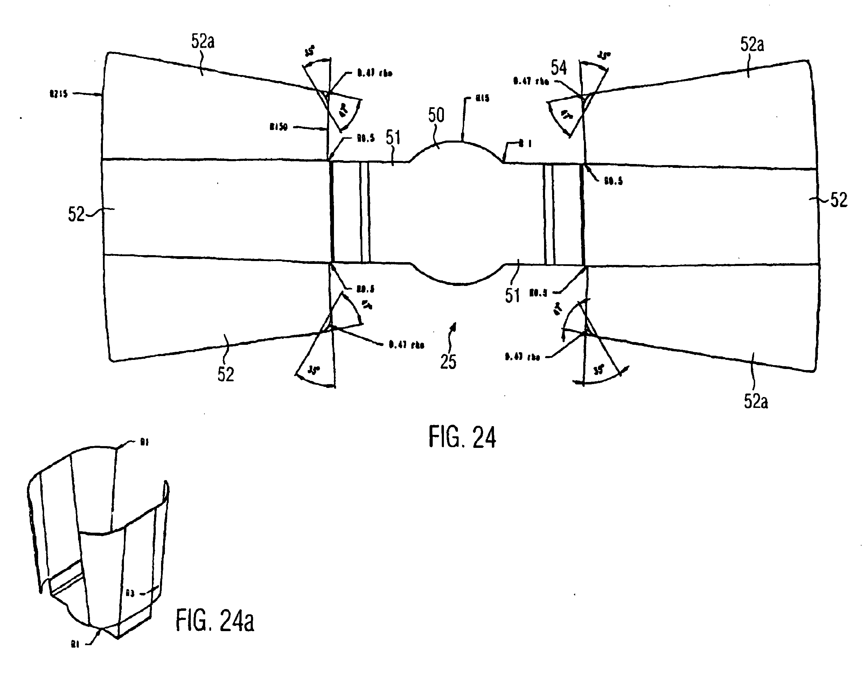

Figur 24 zeigt ein Etikett 25 mit einem stegförmigen Bodenabschnitt 50 und einem konvex ausladenden, für die Aufnahme von Informationsträgern vorgesehenen Mittenabschnitt, mit dem über beiderseitige Umlenkabschnitte 51, Displayabschnitte 52 verbunden sind, so dass ein entsprechend etikettierter Behälter über den Boden hinweg mit zwei an gegenüberliegenden Seiten sich befindenden Etikettierungen versehen wird, wobei Seitenabschnitte 52a der Displayabschnitte 52 nach außen von einem mittleren Stegbereich aus abfallen und in ihrer Längskontur ebenfalls konisch gestaltet sind. Eckbereiche 54 der Seitenabschnitte 52a der Displayabschnitte 52 weisen in einem dem Bodenabschnitt nahen Bereich eine größere Krümmung auf als im gegenüberliegenden Bereich einer Oberkante des Etiketts.

In Figur 24a ist das Etikett in seiner vorbereiteten Kontur zur Verbindung mit dem Behälter in der Form 9 gezeigt.

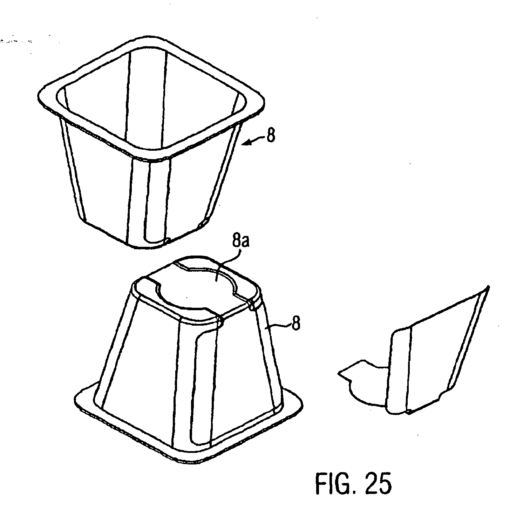

Ein entsprechender konischer Behälter, hier in Verbindung mit einem Etikett 25 nach Fig. 23, zeigt Fig. 25 einmal in Befüllstellung (Fig. 25) und einmal in umgekehrter Position (Fig. 25b), wobei hier auch ein vertiefter Bereich 8a des Behälters 8 zur kongruenten Aufnahme des Bodenabschnittes 50 des betreffenden Etiketts 25 gezeigt ist. Der Behälter 8 ist hier konisch und nicht hinterschnitten, er kann jedoch eine vollständig kreis-zylindrische oder quader-zylindrische Konfiguration aufweisen.

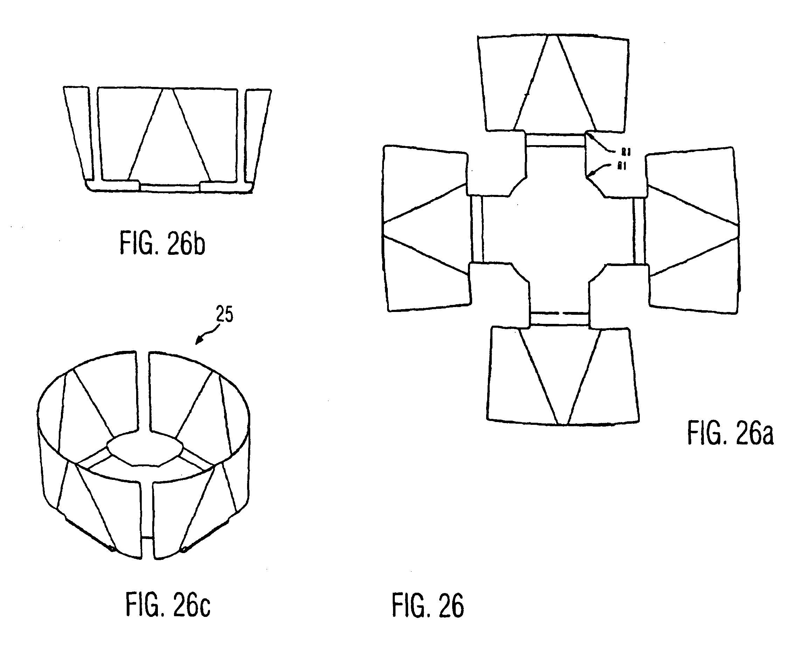

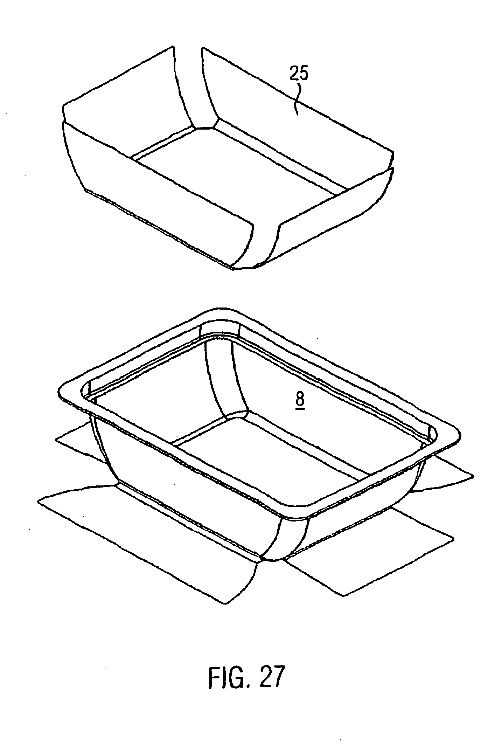

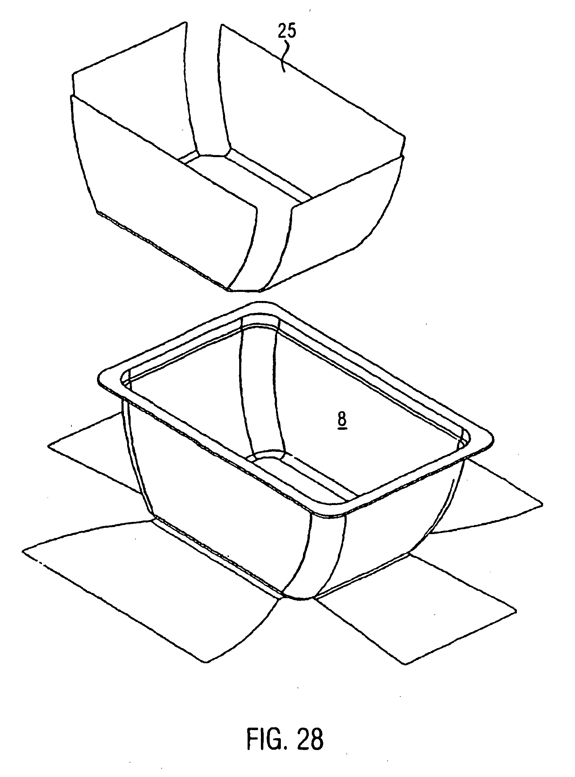

Andere Etikett- und Behälterformen, z.B. in kreuzartiger Anordnung zur allseitigen Etikettierung aller vier Seitenwände eines Behälters 8, sind in den Fig. 26a bis c sowie für einen parallelepipedförmigen Behälter 8 in Fig. 27 sowie Fig. 28 dargestellt.

## Patentansprüche

1. Verfahren zum Herstellen von etikettierten, foliengeformten Behältern, wobei im wesentlichen parallel zu einer Folienzuführung in eine Formstation (1) zur Herstellung der Behälter ein Etiketten-Folienmaterial (12) zu Etiketten geschnitten und diese geschnittenen Etiketten unter Vakuumstützung durch eine Übergabevorrichtung in Formhohlräume einer Form (9) eingesetzt werden, die Form aus dieser dem Einsetzen der Etiketten gewidmeten Position in eine Position für die Formung der Behälter verschwenkt und anschließend die Behälter (8) geformt werden, wobei die in den Formhohlräumen (10) befindlichen Etiketten stoffschlüssig sich mit einer Behälteraußenseite verbinden, **dadurch gekennzeichnet, dass** ein Etiketten-Folienmaterial von seitwärts in eine kontinuierlich-taktweise arbeitende Einrichtung zur Herstellung von aus Folie geformten Behältern, unterhalb einer Hauptarbeitsebene der Führung einer Materialbahn aus Folienmaterial (4) für die Formung der Behälter in die Einrichtung zur Formung der Behälter eingeführt und innerhalb der Einrichtung über zumindest eine Richtungsänderungswalze (28) im wesentlichen parallel zu der Folienbahn für die Formung der Behälter geführt wird.

2. Verfahren nach Anspruch 1, **dadurch gekennzeichnet,** eine Seitenwand des Formhohlraumes oder zwei gegenüberliegende Seitenwände des Formhohlraums und eine Bodenwand des Formhohlraumes, mit Vakuum zum Ansaugen eines Etiketts beaufschlagt wird, das Etikettieren innerhalb einer Form-Fill-Seal-Einrichtung erfolgt, und ein Folienmaterial für eine Formung des Behälters durch stromauf einer Tiefzieh-Stempeleinrichtung angeordnete, plattenförmige Heizeinrichtungen, beiderseits einer Materialbahn des Folienmateriales angeordnet, vorgewärmt wird.

3. Verfahren nach Anspruch 1 oder 2, **dadurch gekennzeichnet, dass** das Etiketten-Folienmaterial im wesentlichen rechtwinklig zu einer Hauptarbeitsrichtung dieser Einrichtung eingeführt wird, die Führung des Etiketten-Folienmateriales über ein System von Spann- und Tänzerwalzen erfolgt und durch zumindest eine Fotozelle gesteuert das Etiketten-Folienmaterial einer Etiketten-Schneideinrichtung kontinuierlich-taktweise zugeführt wird, und vorzugsweise die aus dem Etiketten-Folienmaterial ausgeschnittenen Etiketten innerhalb der Einrichtung zur Formung der Behälter durch Vakuum fixiert transportiert werden.

4. Verfahren nach zumindest einem der vorhergehenden Ansprüche 1 bis 3, **dadurch gekennzeichnet, dass** eine Etiketten-Übertragungsvorrichtung mit Einzeldornen die von vakuumbeaufschlagten Auswerferstiften gehaltenen, ausgeschnittenen Etiketten aufnimmt, unter im wesentlichen formschlüssiger Anlage, und in opponierend bereitgestellte Formhohlräume der Form einlegt, wobei sie innerhalb der Formhohlräume durch Vakuumbeaufschlagung derselben gehalten werden, und/oder die mit den Etiketten versehene Form aus der zweiten Position in eine erste Position zur Formung von Behältern in den mit den Etiketten versehenen Formhohlräumen der Form verlagert, insbesondere verschwenkt wird, während gleichzeitig die Etiketten-Schneideinheit und die Auswerferstifte.

5. Verfahren zum In-Mold-Etikettieren von foliengeformten Behältern nach einem der Ansprüche 1 bis 4, **dadurch gekennzeichnet, dass** in Verbindung mit einem Formgebungsprozess der Behälter in einer Form zumindest ein Etikett aus einer Folie ausgeschnitten, mittels Vakuum gehalten und an eine Etikett-Übertragungs-Vorrichtung, die zwischen einer Etikett-Schneidvorrichtung und der Form bewegbar ist, übergeben und durch diese in einen Formhohlraum der Form eingesetzt, in der Form in Anlage zumindest einer Formwandung mittels Vakuum gehalten und anschließend der Behälter aus einer in den Formhohlraum verlagerten Folie unter Stoffschlüssiger Verbindung zu dem in dem Formhohlraum befindlichen Etikett geformt wird.

6. Verfahren zum In-Mold-Etikettieren von foliengeformten Behältern nach einem der Ansprüche 1 bis 5, **gekennzeichnet durch** eine Form, in der die Behälter **durch** einen Tiefzieh- und/oder Blasform-Vorgang aus der Folie hergestellt werden, zwischen einer ersten, vorzugsweise vertikalen Position, in der die Behälter geformt werden und einer zweiten, im wesentlichen horizontalen Position, in der ein Etikett in einen Formhohlraum der Form eingelegt wird, ehe der Behälter geformt wird, **durch** eine NockenSteuereinrichtung, angetrieben **durch** eine Kurbelantriebsvorrichtung, verlagert, linear und schwenkbewegt wird, und die Form zwischen der ersten und zweiten Position um ca. 90° geschwenkt wird.

7. Einrichtung zur Herstellung von etikettierten, foliengeformten Behältern (8) zur Durchführung des Verfahrens nach einem der vorhergehenden Ansprüche 1 bis 6, mit einer
- Zuführungseinheit für Behälter-Folienmaterial (4) zur Formung von Behältern (8) aus Kunststoff,
- einer Formstation (1) zur Formung der Behälter unter Verlagerung von Behälter-Folienmaterial in Formhohlräume einer Form,
- eine Form-Bewegungseinheit (2) zur Positionierung der Form in eine erste Position, in der eine Formung von Behältern (8) erfolgt, und einer zweiten Position, in der eine Einlage von Etiketten in die Formhohlräume der Form erfolgt,
- eine Etiketten-Folienmaterial-Zufuhreinrichtung zur Zuführung von Etiketten-Folienmaterial (12) zu einer Etiketten-Schneideinrichtung, und
- einer Etiketten-Übergabeeinrichtung, angeordnet zwischen der Etiketten-Schneideinrichtung (13) und der Formstation (1), wobei die Etiketten-Folienmaterial-Zufuhreinrichtung eine seitlich einer Hauptzuführungsrichtung von Behälter-Folienmaterial zu der Formstation angeordneten Etiketten-Folienmaterial-Vorratswickel, ein Spann- und Tänzerrollensystem (16) für das Etiketten-Folienmaterial, Führungswalzen stromauf und stromab der Etiketten-Schneideinrichtung zur im wesentlichen vertikalen Führung des Etiketten-Folienmateriales durch die unterhalb einer Hauptzuführungsebene für das Behälter-Folienmaterial angeordnete Etiketten-Schneideinrichtung aufweist und ein Etiketten-Restfolienmaterial stromab der Etiketten-Schneideinrichtung über Bandführungswalzen zu einer Restfolienmaterial-Aufwickelhaspel (14), angeordnet vorzugsweise unterhalb eines Folienzuführungsbereiches der Hauptzuführungsebene geführt und dort aufwickelbar ist.

8. Einrichtung nach Anspruch 7, **dadurch gekennzeichnet, dass** die Etiketten-Schneideinrichtung eine obere und eine untere Werkzeugstanzplatte aufweist, zwischen denen das Etiketten-Folienmaterial hindurchgeführt wird, zum Ausschneiden eines, insbesondere zum gleichzeitigen Heraustrennen einer Mehrzahl von Etiketten aus dem Etiketten-Folienmaterial, wobei innerhalb der Etiketten-Schneideinrichtung vakuumbeaufschlagte Auswerferstifte vorzugsweise längsbeweglich angeordnet sind, durch die stirnseitig mittels Vakuum die von der Etiketten-Schneideinrichtung ausgeschnittenen Etiketten gehalten sind, insbesondere innerhalb der Schneideinrichtung längsbewegliche Führungsfinger angeordnet sind, die relativ zu den vakuumbeaufschlagten Auswerferstiften bewegbar sind, zum Zusammenwirken mit Einzeldornen der stromab der Etiketten-Schneideinrichtung schwenk- und linearbeweglich vorgesehenen Etiketten-Übergabevorrichtung, und/oder die Übergabevorrichtung eine Mehrzahl von Einzeldornen aufweist, die zwischen einer Etiketten-Aufnahmeposition, mit ihren Stirnseiten zugewandt den von den Auswerferstiften der Etiketten-Schneideinrichtung gehaltenen Etiketten, und einer Etiketten-Abgabeposition zentriert auf zugehörige Formhohlräume schwenkbar und/oder longitudinal beweglich angeordnet sind, vorzugsweise die Einzeldorne vakuumbeaufschlagt sind und die Etiketten an ihrer Stirnseite lagern.

9. Einrichtung nach zumindest einem der vorhergehenden Ansprüche 7 oder 8, **dadurch gekennzeichnet, dass** die Einzeldorne der Übergabevorrichtung mit den Führungsfingern der Schneideinrichtung bei der Aufnahme der Etiketten zusammenwirken und die Etiketten durch die Führungsfinger an eine Außenkontur der Einzeldorne in Längsrichtung anlegbar sind insbesondere die Einzeldorne blockweise bewegbar und in einer der Anzahl von Formhohlräumen der Form entsprechenden Anzahl vorgesehen sind.

10. Einrichtung nach zumindest einem der vorhergehenden Ansprüche 7 bis 9, **dadurch gekennzeichnet, dass** eine obere Werkzeugstanzplatte der Etiketten-Schneideinrichtung durch einen mechanischen, einen mechanisch/pneumatischen, einen pneumatischen oder einen elektromechanischen Antrieb bewegbar ist, vorzugsweise Auswerferstifte und/oder Führungsfinger der Schneideinrichtung pneumatisch antreibbar sind.

11. Einrichtung nach zumindest einem der vorhergehenden Ansprüche 7 bis 10, **dadurch gekennzeichnet, dass** die Form eine Mehrzahl, vorzugsweise in einer Mehrzahl von Reihen angeordnete Formhohlräume aufweist, wobei die Form vakuumbeaufschlagt ist und insbesondere zumindest eine Seitenwand, vorzugsweise gegenüberliegende Seitenwände und/oder eine Bodenwand des Formhohlraumes mit Vakuum, vorzugsweise durch eine Mehrzahl von Vakuumbohrungen geringer Öffnungsweite mit Vakuumkanälen innerhalb der Form verbunden ist, insbesondere die Form zwischen zwei Formhohlräumen einsetzbare Formstücke aufweist, die mit Vakuumbohrungen versehen sind.

12. Einrichtung nach zumindest einem der vorhergehenden Ansprüche 7 bis 11, **dadurch gekennzeichnet, dass** ein Transport von Etiketten innerhalb der Einrichtung und/oder eine Fixierung innerhalb von Formhohlräumen der Form vakuumgestützt erfolgt, wobei das Behälter-Folienmaterial der Formstation als kontinuierliche Materialbahn oder in vorgeschnittenen Streifenabschnitten zugeführt und insbesondere stromauf der Formstation eine Folien-Vorwärmstation, vorzugsweise bestehend aus beiderseits des Folienmateriales angeordneten Heizplatten, vorgesehen ist, und in der Formstation, vorzugsweise gleichzeitig, eine Mehrzahl von Behältern durch Stempel- und/oder Fluidbeaufschlagung, insbesondere durch Tiefziehen und/oder Blasformen herstellbar sind.

13. Einrichtung nach zumindest einem der vorhergehenden Ansprüche 7 bis 12, **dadurch gekennzeichnet, dass** die Form-Bewegungseinheit eine Nockensteuereinrichtung für eine Schwenkbewegung der Form zwischen einer ersten Position, in der eine Formung von Behältern erfolgt, und einer zweiten Position, in der Etiketten in Formhohlräume der Form vor einer Formung der Behälter eingelegt werden, aufweist, und vorzugsweise eine Kurbel-Antriebsvorrichtung für die Form für eine Längs- und/oder Schwenkbewegung der Form vorgesehen ist.

14. Einrichtung nach zumindest einem der vorhergehenden Ansprüche 7 bis 13, **dadurch gekennzeichnet, dass** die Etiketten-Schneideinrichtung zum Schneiden des Etiketten-Folienmateriales aus Polypropylen (PP) oder haftbeschichtetem Papier unterhalb einer Hauptzuführebene für die Zuführung von Behälter-Folienmaterial, insbesondere aus Polysteren, Polypropylen, Polyethylen, PET oder PVC, zur Formung der Behälter angeordnet ist.

## Claims

1. Method for manufacturing labeled, sheet-formed containers, wherein, substantially in parallel to a sheet supply into a mold station (1) for manufacturing the containers, a label sheet material (12) is cut to labels and these cut labels are inserted into mold cavities of a mold (9) through a transfer device by using a vacuum support, the mold is pivoted from this position dedicated to the insertion of the labels to a position for molding the containers, and subsequently the containers (8) are formed, wherein the labels located in the mold cavities (10) connected positively with an outer container side, **characterized in that** the label sheet material is inserted from the side into a continuously-cyclically operating means for manufacturing containers made of a sheet below a main working plane of the guide of a material web of sheet material (4) for the shaping of the containers into the means for shaping the containers, and is guided within the means over at least one turnaround roller (28) substantially in parallel to the sheet web for shaping the container.

2. Method as claimed in claim 1, **characterized in that** one side wall of the mold cavity or two opposing side walls of the mold cavity and/or a bottom wall of the mold cavity are charged with a vacuum for sucking-on a label, the labeling is carried out within a form-fill seal means, and a sheet material for shaping a container is pre-heated by a plate-shaped heating means arranged upstream of a deep drawing die means arranged preferably on both sides of a material web of the sheet material.

3. Method as claimed in claim 1 or 2, **characterized in that** the label sheet material is inserted preferably at a right angle with respect to a main working direction of this means, the guide of the label sheet material is implemented via a system of tension and carrier rollers and the label sheet material is continuously clock-wise supplied to a label cutting means in a manner controlled by at least one photo cell, and/or after cutting a plurality of labels, the residual label material in the cutting means is wound up on a residual material bobbin, preferably the labels cut out of the label sheet material are transported in a manner fixed by vacuum within the means for shaping the containers.

4. Method as claimed in at least one of the preceding claims 1 to 3, **characterized in that** a label transfer device with single mandrels receives the cut-out labels held by vacuum-loaded ejector pins by a substantially positive abutment, and are inserted into opposingly provided mold cavities of the mold, wherein they are held within the mold cavities by vacuum charge of same, and/or the mold provided with the labels is displaced, particularly pivoted from the second position into a first position for shaping containers in the mold cavities of the mold provided with the labels while at the same time the label cutting unit and the ejector pins.

5. Method for in-mold-labeling of sheet-formed container according to one of the claims 1 to 4, **characterized in that** in connection with a container forming process at least one label is cut out of a sheet in a mold, the label is held by means of a vacuum and transferred to a label transfer device movable between a label cutting device and the mold, and is inserted through this device into a mold cavity of the mold, and is held in the mold in abutment of at least one mold wall by means of a vacuum, and subsequently the container is formed from a sheet moved into the mold cavity under positive connection to the label located in the mold cavity.

6. Method for in-mold-labeling of sheet-formed container according to one of claims 1 to 5, **characterized in that** a mold in which the containers are manufactured from the sheet by means of a deep drawing and/or blowing process is displaced preferably linearly and is pivoted between a first, preferably vertical position in which the containers are formed and a second, substantially horizontal position in which a label is inserted into the mold before the container is formed by a cam control device, linearly and pivtoably by a crank drive device, and/or the mold is pivoted about approx. 90° between the first and the second position.

7. Means for manufacturing labeled, sheet-formed containers (8) for executing the method according to one of the claims 1 to 6, comprising
- supply means for container sheet material (4) for forming containers (8) of plastic material,
- a molding station (1) for molding the containers by displacing container sheet material into mold cavities of a mold,
- a mold movement unit (2) for positioning the mold into a first position, in which a molding of containers (8) takes place, and a second position, in which an insertion of labels into the mold cavities of the mold takes place,
- a label sheet material supply means for supplying label sheet material (12) to a label cutting means, and
- a label transfer means, arranged between the label cutting means (13) and the molding station (1), wherein the label sheet material supply means comprises a label sheet material stock bobbin arranged laterally with respect to a main supply direction of container sheet material to the molding station, a tension and dancer roll system (16) for the label sheet material, guide rollers upstream or downstream of the label cutting means to the substantially vertical guide of the label sheet material through the label cutting means arranged below a main supply plane for the container sheet material, and a label residual sheet material is guided downstream of the label cutting means via belt guiding rolls to a residual sheet material winding bobbin (14), arranged preferably below a sheet supply portion of the main supply plane, and can be wound up on this bobbin.

8. Means as claimed in claim 7, **characterized in that** the label cutting means comprises an upper and a lower tool punching plate, between which the label sheet material is passed, for cutting or preferably for simultaneously detaching a plurality of labels from the label sheet material, wherein within the label cutting device vacuum-charged ejector pins are arranged in a preferably longitudinally movable manner, through which on the front end side the labels cut out by the label cutting means are held by means of a vacuum, in particular longitudinally movable guide fingers are arranged within the cutting means, said guide fingers being movable relative with respect to the vacuum-charged ejector pins for cooperation with single mandrels of the label transfer device provided downstream of the label cutting means in a pivotal and linearly movable manner, and/or the transfer device comprises a plurality of single mandrels, which are arranged in a pivotal and/or longitudinally movable manner between a label receiving position with its front end sides facing the labels held by the ejector pins of the label cutting means and a label discharge position centered on associated mold cavities, in particular the single mandrels are vacuum-charged and the labels rest on its front end side.

9. Means as claimed in claim 7 or 8, **characterized in that** the single mandrels of the transfer device cooperate with the guide fingers of the cutting means during the reception of the labels, and the labels can be rested by the guide fingers against an outer contour of the single mandrels in the longitudinal direction, in particular the single mandrels can be moved blockwise and are provided in an amount corresponding to the amount of mold cavities of the mold.

10. Means as claimed in at least one of the preceding claims 7 to 9, **characterized in that** an upper tool punching plate of the label cutting means is movable through a mechanical, a mechanical/pneumatic, a pneumatic or an electromechanical drive, preferably ejector pins and/or guide fingers of the cutting means can be driven pneumatically.

11. Means as claimed in at least one of the preceding claims 7 to 10, **characterized in that** the mold comprises a plurality of mold cavities arranged in rows, wherein the mold is vacuum-charged and particularly a side wall, particularly opposing side walls and/or a bottom wall of the mold cavity with vacuum is connected preferably by a plurality of vacuum bores of a small opening width with vacuum channels within the mold, in particular the mold comprises mold pieces insertable between two mold cavities, aid mold pieces being provided with vacuum bores.

12. Means as claimed in at least one of the preceding claims 7 to 11, **characterized in that** a transport of labels within the means and/or a fixing within mold cavities of the mold is implemented in a vacuum-supported manner, wherein the container sheet material of the molding station is supplied as a continuous material web or in pre-cut strip section, and, in particular upstream of the mold station a sheet preheating station is provided, preferably composed of heating plates arranged on both sides of the sheet material, and a plurality of containers can be manufactured in a molding station, particularly equilaterally, by means of a die and/or fluid charge, particularly by a deep drawing or blow molding process.

13. Means as claimed in at least one of the preceding claims 7 to 12, **characterized in that** the mold movement means comprises a cam control means for a pivot movement of the mold between a first position in which a molding of containers takes place and a second position in which the labels are inserted into mold cavities of the mold before molding the containers, and, preferably a crank drive means for the mold is provided for a longitudinal and/or pivot movement of the mold.

14. Means as claimed in at least one of the preceding claims 7 to 13, **characterized in that** the label cutting means for cutting of the label sheet material of polypropylene (PP) or adhesive paper is arranged below a main supply plane for supplying container sheet material, particularly of polystyrene, polypropylene, polyethylene, PET or PVC to mold the containers.

## Revendications

1. Procédé de fabrication de récipients ou contenants étiquetés, façonnés par formage à partir d'une feuille,
d'après lequel, de manière sensiblement parallèle à une amenée de feuille dans un poste de formage (1) pour la fabrication des contenants, on découpe un matériau d'étiquette en feuille (12) en étiquettes, et l'on introduit ces étiquettes découpées en étant assisté par le vide, dans des cavités de moule d'un moule de formage (9) par l'intermédiaire d'un dispositif de transfert, on fait pivoter le moule de formage de cette position dédiée à l'insertion des étiquettes, dans une position adaptée au formage des contenants, et les contenants (8) sont ensuite formés,
et d'après lequel les étiquettes se trouvant dans les cavités de moule (10) se lient avec un côté extérieur du contenant, par une liaison à continuité de matière, **caractérisé en ce qu'**un matériau d'étiquette en feuille est introduit latéralement dans une installation travaillant de manière cyclique continue pour la fabrication de contenants formés à partir d'une feuille, en-dessous d'un plan de travail principal du guidage d'une nappe de matériau en un matériau en feuille (4) pour le formage des contenants dans l'installation de formage des contenants, et est guidé à l'intérieur de l'installation, par l'intermédiaire d'au moins un rouleau de changement de direction (28), de manière sensiblement parallèle à la nappe de feuille pour le formage des contenants.

2. Procédé selon la revendication 1, **caractérisé en ce qu'**une paroi latérale de la cavité de moule ou deux parois latérales opposées de la cavité de moule et une paroi de fond de la cavité de moule sont soumises à l'action d'un vide pour aspirer une étiquette, l'étiquetage s'effectue à l'intérieur d'une installation de formage-remplissage-scellage, et un matériau en feuille pour le formage du contenant est préchauffé par des dispositifs de chauffage en forme de plaques, agencés en amont d'un dispositif à poinçon d'emboutissage profond et disposés de part et d'autre d'une nappe de matériau du matériau en feuille.

3. Procédé selon la revendication 1 ou la revendication 2, **caractérisé en ce que** le matériau en feuille pour les étiquettes est introduit sensiblement de manière perpendiculaire à une direction de travail principale de cette installation, le guidage du matériau en feuille pour les étiquettes s'effectue par l'intermédiaire d'un système de rouleaux de tension et de rouleaux compensateurs, et le matériau en feuille pour les étiquettes est amené de manière cyclique continue, en étant piloté par au moins une cellule photoélectrique, à un dispositif de découpe d'étiquettes, et les étiquettes découpées dans le matériau d'étiquette en feuille sont de préférence transportées en étant fixées par le vide, à l'intérieur de l'installation pour le formage des contenants.

4. Procédé selon l'une au moins des revendications précédentes 1 à 3, **caractérisé en ce qu'**un dispositif de transfert d'étiquettes avec des mandrins individuels reprend les étiquettes découpées maintenues par des broches d'éjecteur reliées au vide, par un appui sensiblement par complémentarité de formes, et les insère dans des cavités de moule du moule de formage, placées en regard, les étiquettes étant maintenues à l'intérieur des cavités de moule en étant soumises à l'action du vide, et/ou le moule de formage muni des étiquettes est déplacé, notamment par pivotement, de la deuxième position à la première position pour le formage de contenants dans les cavités de moule du moule de formage munies des étiquettes, tandis que simultanément l'unité de découpe des étiquettes et les broches d'éjecteurs.

5. Procédé pour l'étiquetage dans le moule, de contenants obtenus par le formage de feuille, selon l'une des revendications 1 à 4, **caractérisé en ce qu'**en liaison avec un processus de formage des contenants dans un moule de formage, au moins une étiquette est découpée dans une feuille, est maintenue au moyen de vide, et transmise à un dispositif de transfert d'étiquettes, qui est mobile entre un dispositif de découpe d'étiquettes et le moule de formage, et grâce auquel elle est insérée dans une cavité de moule du moule de formage, l'étiquette étant maintenue dans le moule de formage en appui contre au moins une paroi de moule, au moyen du vide, et le contenant étant ensuite façonné par formage d'une feuille ayant été déplacée dans la cavité de moule, en réalisant une liaison par continuité de matière avec l'étiquette se trouvant dans la cavité de moule.

6. Procédé pour l'étiquetage dans le moule, de contenants obtenus par le formage de feuille, selon l'une des revendications 1 à 5, **caractérisé par** un moule de formage dans lequel les contenants sont fabriqués à partir de la feuille par un processus d'emboutissage profond et/ou de formage par soufflage, que l'on déplace linéairement et par pivotement entre une première position, de préférence verticale, dans laquelle les contenants sont façonnés par formage, et une deuxième position, sensiblement horizontale, dans laquelle une étiquette est insérée dans une cavité de moule du moule de formage avant le façonnage par formage du contenant, grâce à un dispositif de commande par came, entraîné par un dispositif d'entraînement à manivelle, et l'on fait pivoter le moule d'environ 90° entre la première et la deuxième position.

7. Installation pour la fabrication de récipients ou contenants (8) étiquetés, formés à partir d'une feuille, destinée à la mise en oeuvre du procédé selon l'une des revendications précédentes 1 à 6, comprenant
- une unité d'alimentation pour du matériau en feuille de contenant (4) pour le façonnage par formage de contenants (8) en matière plastique,
- un poste de façonnage par formage (1) pour le formage des contenants par déplacement d'un matériau en feuille de contenant dans des cavités de moule d'un moule de formage,
- une unité de déplacement de moule de formage (2) pour positionner le moule de formage dans une première position, dans laquelle s'effectue un façonnage par formage de contenants (8), et une deuxième position, dans laquelle s'effectue une insertion d'étiquettes dans les cavités de moule du moule de formage,
- un dispositif d'amenée de matériau en feuille pour étiquette pour l'amenée de matériau en feuille d'étiquette (12) à un dispositif de découpe d'étiquettes, et
- un dispositif de transfert d'étiquettes agencé entre le dispositif de découpe d'étiquettes (13) et le poste de façonnage par formage (1), le dispositif d'amenée de matériau en feuille d'étiquette comprenant une bobine de réserve de matériau en feuille d'étiquette, agencée latéralement à une direction d'amenée principale de matériau en feuille de contenant, au poste de façonnage par formage (1), un système de rouleaux de tension et de compensation (16) pour le matériau en feuille d'étiquette, des rouleaux de guidage en amont et en aval du dispositif de découpe d'étiquettes pour le guidage sensiblement vertical du matériau en feuille d'étiquette à travers le dispositif de découpe d'étiquettes agencé en-dessous d'un plan d'amenée principal pour le matériau en feuille de contenant, et un matériau en feuille d'étiquette résiduel étant guidé, en aval du dispositif de découpe d'étiquettes, par l'intermédiaire de rouleaux de guidage de bande, vers une bobine d'enroulement de matériau en feuille résiduel (14), agencée de préférence en-dessous d'une zone d'amenée de feuille du plan d'amenée principal, et où est enroulée ce matériau en feuille d'étiquette résiduel.

8. Installation selon la revendication 7, **caractérisée en ce que** le dispositif de découpe d'étiquettes présente une plaque d'outil de matriçage supérieure et inférieure entre lesquelles on fait passer le matériau en feuille d'étiquette, pour la découpe d'une, notamment pour le matriçage simultané d'une pluralité d'étiquettes dans le matériau en feuille d'étiquette, **en ce qu'**à l'intérieur du dispositif de découpe d'étiquettes sont agencées, de préférence de manière mobile longitudinalement, des broches d'éjecteur reliées au vide par lesquelles sont maintenues au moyen du vide, les étiquettes découpées par le dispositif de découpe d'étiquettes, **en ce que** notamment à l'intérieur du dispositif de découpe sont agencés des doigts de guidage mobiles longitudinalement, qui peuvent être déplacés par rapport aux broches d'éjecteur reliées au vide, pour interagir avec des mandrins individuels du dispositif de transfert d'étiquettes prévu mobile linéairement et en pivotement en aval du dispositif de découpe d'étiquettes, et/ou **en ce que** le dispositif de transfert présente une pluralité de mandrins individuels, qui sont agencés pivotants et/ou mobiles longitudinalement entre une position de réception d'étiquette, avec leur faces frontales dirigées vers les étiquettes maintenues par les broches d'éjecteur du dispositif de découpe d'étiquettes, et une position d'évacuation d'étiquette centrée sur des cavités de moule associées, et **en ce que** les mandrins individuels sont de préférence reliés au vide et supportent les étiquettes au niveau de leur face frontale.

9. Installation selon l'une au moins des revendications précédentes 7 ou 8, **caractérisée en ce que** les mandrins individuels du dispositif de transfert interagissent avec les doigts de guidage du dispositif de découpe, lors de la réception des étiquettes, et les étiquettes peuvent être appliquées par les doigts de guidage, contre un contour extérieur des mandrins individuels, dans la direction longitudinale, les mandrins individuels étant notamment mobiles en bloc et prévus en un nombre correspondant au nombre de cavités de moule du moule de formage.

10. Installation selon l'une au moins des revendications précédentes 7 à 9, **caractérisée en ce qu'**une plaque d'outil de matriçage supérieure du dispositif de découpe d'étiquettes peut être déplacée par un entraînement mécanique, mécanique/pneumatique, pneumatique et/ou électromécanique, et **en ce que** de préférence des broches d'éjecteur et/ou des doigts de guidage du dispositif de découpe peuvent être entraînés par voie pneumatique.

11. Installation selon l'une au moins des revendications précédentes 7 à 10, **caractérisée en ce que** le moule de formage présente une pluralité de cavités de moule, de préférence agencées selon plusieurs rangées, le moule de formage étant raccordé au vide, **en ce que** notamment au moins une paroi latérale, de préférence des parois latérales opposées et/ou une paroi de fond de la cavité de moule sont reliées au vide, de préférence par l'intermédiaire d'une pluralité de perçages de vide de faible largeur d'ouverture reliés à des canaux de vide à l'intérieur du moule de formage, et **en ce que** le moule de formage présente notamment des pièces de moule munies de perçages de vide et pouvant être insérées entre deux cavités de moule.

12. Installation selon l'une au moins des revendications précédentes 7 à 11, **caractérisée en ce qu'**un transport d'étiquettes à l'intérieur de l'installation et/ou une fixation à l'intérieur de cavités de moule du moule de formage s'effectuent en étant assistés par le vide, **en ce que** le matériau en feuille de contenant est amené au poste de façonnage par formage sous forme de nappe de matériau continue ou de tronçons de bande prédécoupés, et notamment en amont du poste de façonnage par formage est prévu un poste de préchauffage de feuille, de préférence constitué de plaques chauffantes agencées sur les deux faces du matériau en feuille, et **en ce que** dans le poste de façonnage par formage peuvent être fabriqués, de préférence simultanément, une pluralité de contenants, sous l'effet d'un poinçon de matriçage et/ou d'un fluide, notamment par emboutissage profond et/ou formage par soufflage.

13. Installation selon l'une au moins des revendications précédentes 7 à 12, **caractérisée en ce que** l'unité de déplacement de moule présente un dispositif de commande par cames pour un mouvement de pivotement du moule de formage entre une première position, dans laquelle s'effectue un formage de contenants, et une deuxième position dans laquelle des étiquettes sont insérées dans des cavités de moule du moule de formage avant un formage des contenants, et **en ce que** de préférence, il est prévu un dispositif d'entraînement à manivelle destiné au moule de formage, pour un mouvement longitudinal et/ou de pivotement du moule de formage.

14. Installation selon l'une au moins des revendications précédentes 7 à 13, **caractérisée en ce que** le dispositif de découpe d'étiquettes destiné à découper le matériau en feuille d'étiquette en polypropylène (PP) ou papier à revêtement adhésif, est agencé en-dessous un plan d'amenée principal pour l'amenée de matériau en feuille de contenant, notamment en polyester, polypropylène, polyéthylène, PET ou PVC, pour le formage des contenants.
